# EUROPEAN PATENT SPECIFICATION

(11) **EP 3 376 606 B1**
(45) Date of publication and mention of the grant of the patent: **05.05.2021**
(21) Application number: 17161625.3
(22) Date of filing: 17.03.2017
(51) Int. Cl.: H01R 13/58

(54) **CABLE HARNESS PLUG**
KABELBAUMSTECKER
CONNECTEUR DE FAISCEAU DE CÂBLE

(43) Date of publication of application: 19.09.2018
(73) Proprietor: Aptiv Technologies Limited, St. Michael (BB)
(72) Inventor: KOT, Lukasz, 32-045 Suloszowa (PL); GRUDZEWSKI, Michal, 31-515 Kraków (PL)
(74) Representative: Manitz Finsterwald Patent- und Rechtsanwaltspartnerschaft mbB

(56) References cited:
- EP-A1- 2 590 271
- EP-A1- 3 057 182
- GB-A- 2 518 076
- JP-A- 2012 119 241
- US-A1- 2002 055 299
- US-A1- 2007 193 002

## Description

### Field of the invention

The present invention relates to a cable harness plug for establishing a disconnectable electric plug-and-socket connection with another plug part, including a housing part in which electric contact elements are arranged, and a cover to protect the contact elements, as well as a fastening device for fastening a cable harness leading to the contact elements to the cable harness plug.

### Technical background

Disconnectable plug-and-socket connections are known in a variety of versions. As a rule, they include a first plug part, e.g., a cable harness plug and another plug part, e.g., a male connector. The cable harness plug itself includes a contact carrier in the form of a housing part in which the electric contact elements are arranged and a cover to protect the contact elements from dirt, water or the like or unintentional contact. The cover can be latched on the contact carrier. To prevent unintentional opening of the cover and thus detachment from the contact carrier, the cover can be secured by using a securing device, e.g., by a retaining strap. Furthermore, there are known cable protection devices which are used to guide the cable harness to the contact elements and to protect the cable harness from mechanical stresses in the transitional area from support sleeves, sheathing or the like to the plug part. They are usually composed of two interlocking half-shells with the cable harness inside. The half-shells are usually connected in one piece to the plug part. One disadvantage of the type mentioned above of cable harness plugs is that it does not permit a vibration-proof arrangement of the cable harness directly on the cable harness plug, to protect it from mechanical damage at the transition from the cable protection device to the cable harness plug. To solve the problems caused by the vibration, retaining straps are used to fasten the cable harness at the inlet portion of the housing part or to the over. The retaining straps are guided through holes in the housing part or in the cover and wind around the cable harness to fasten it to the housing part or to the cover. This fastening method results in easy handling but requires additional holes in the connector housing. This leads to an unsealed connector that is sensitive to dust and humidity.

EP 3 057 182 A1 discloses an electrical cable harness plug according to the preamble of claim 1. The plug has a conduit adapter comprised of a first shell and a second shell which form a tube-shaped channel for guiding cables through. The cables can be fixed by means of a cable strap which is guided through openings formed in the wall of the channel.

The object of the invention is to provide an electrical cable harness plug for rough environments that is robust against vibration and dustproof whereby easy to handle while assembly and attachable to corrugated tubes.

These and other objects which become apparent upon reading the following description are solved by an electrical cable harness plug according claim 1.

### Summary of the invention

According to the invention, an electrical cable harness plug, comprising a housing part, comprising cavities for receiving electric contact elements and a fastening device to fasten a cable harness, comprising the electrical contact elements. The electrical cable harness plug furthermore comprising a cover to protect the contact elements, wherein a housing transition portion of the housing part and a cover transition portion of the cover cooperate with each other, to define a tube shaped guiding channel for guiding the cable harness through. The fastening device is arranged inside the guiding channel, wherein the fastening device comprises means adapted to cooperate with a cable tie such that it guides and holds the cable tie in a holding direction perpendicular to an extension direction of the guiding channel, wherein the cable tie is movable through an opening of the fastening device and around the cable harness.

The electrical connector assembly provides an electrical cable harness plug for rough environments because it has no additional openings to the environment. When used with additional tubes surrounding the cable harness it is possible to provide a well-sealed harness structure for use in vehicles. The effect of vibration to the electrical contact elements is reduced because the wires that are attached on the electrical contact elements are fastened to a robust part of housing part. That causes that the electrical contact elements and still wires move in the same way so that no differential forces work to them. There are no damages caused by vibration expected when using this design. The assembly process is also easy to conduct and no special tools are necessary while manufacturing the cable harness.

The fastening device comprises at least one handle, comprising a first protrusion and a second protrusion protruding, spaced apart from each other, by a first distance, from the housing transition portion into the guiding channel, a handle bar connects the free end of the first protrusion and the free end of the second protrusion in a second distance from the housing transition portion. This simple and robust design provides a handle with an opening to feed through the cable tie.

According to the invention, the first protrusion and the second protrusion are arranged in a row along the extension direction of the guiding channel. The arrangement provides a guiding along the holding direction. When using more than one handle bar the cable tie is pre-aligned to the second handle bar that is arranged in a row along the holding direction. That makes the assembly of the cable tie to the housing part easier.

Advantageously, the fastening device comprises at least one channel segment, comprising a first rib and a second rib protruding along the holding direction, spaced apart from each other by a third distance, from the housing transition portion into the guiding channel, wherein at least one rib bar connects a portion of the free end of the first rib and a portion of the free end of the second rib in a fourth distance from the housing transition portion, thereby defining a tube shaped portion. The structure made of ribs and the ribbed bar provides a better guiding for the cable tie. For some more this construction is even more robust against pull forces than the handle construction. But on the other hand a housing part with this feature is more difficult to produce. The choice of embodiment follows the requirements in the vehicle.

Preferably, the first distance is corresponding to the cable tie, in a way that the first distance is bigger than the width of the cable tie and wherein the second distance is corresponding to the cable tie, in a way that the second distance is bigger than the height of the cable tie so that the cable tie is guided. The two distances describe the geometry of the opening. The size of the opening depends on the geometry of the used cable tie. The cross-section of the opening needs to be at least slightly bigger than the cross-section of the cable tie to make a movement of the cable tie in the opening possible.

Advantageously, the third distance is corresponding to the cable tie, in a way that the third distance is bigger than the width of the cable tie and wherein the fourth distance is corresponding to the cable tie, in a way that the fourth distance is bigger than the height of the cable tie so that the cable tie is guided. The two distances describe the geometry of the opening in the tube shaped portion. The size of the opening depends here also on the geometry of the cable tie. The cross-section of the openings needs to be at least slightly bigger than the cross-section of the cable tie to make a movement of the cable tie in the opening of the tube shaped portion possible. Because the tube shaped portion has more contact areas in common with the cable tie than the handle, the distances may be bigger than the distances in the handle.

Preferably, the fastening device comprises at least one handle and at least one channel segment arranged in a row along the holding direction. The use of the handle and an additional channel segment provides improved guiding and holding properties. The cable tie is guided and held on several points. This design may be the best to fasten the cable harness but it also increases costs in production of the housing part.

Advantageously, the first distance is bigger than the third distance and the second distance is bigger than the fourth distance. To choose bigger cross-section in the handle and smaller cross sections in the channel segment provides advantages while assembling the cable tie. The big opening in the handle makes it easy to feed in the cable ties tip and pre-adjust the cable tie to feed it into the channel segment.

Preferably, the handle bar comprises a guiding surface located between the first protrusion and the second protrusion, whereby the guiding surface is sloped or curved to enlarge the area of the handle where the cable tie is inserted while assembling. The guiding surface guides the tip of the cable tie while insertion through the handle while it works like a funnel for the cable tie.

Advantageously, the guiding channel comprises a channel first end and a channel second end, wherein the channel first end is closer to the cavities than the channel second end, whereby the fastening device is located at the channel first end. The fastening device is located close to the cavities because the length of the wires that could be impacted by vibration should be as short as possible. Furthermore a space between the fastening device and the entry region of the cable harness can be used for sealing means or protection tubes.

Preferably, the guiding channel comprises holding means to secure a corrugated tube on the channel second end of the guiding channel. To improve the sealing and robustness of the cable harness a corrugated tube can be arranged around the wires. The corrugated tube can be attached to the second end of the guiding channel to provide continuity of the sealing and robustness to the electrical cable harness plug.

Advantageously, the holding means comprises at least one holding rib protruding along the holding direction, from the housing transition portion into the guiding channel, whereby the holding rib cooperates with a narrowing in the corrugated tube, to secure the corrugated tube. The corrugated tube can be attached to the electrical cable harness plug by just moving the corrugated tube into the guiding channel until the rib snaps into the narrowing of the corrugated tube. In another embodiment the corrugated tube can be screwed into the guiding channel.

Preferably, the housing part is made in one piece whereby the housing part is produced by injection molding. To produce the housing part in one piece by injection molding is a cheap method.

Advantageously, the electrical cable harness assembly comprises an electrical cable harness plug as described above and the cable harness, the electrical contact elements as well as the cable tie. The electrical cable harness assembly can be manufactured by the following steps: providing the electrical cable harness plug and the cable harness with electrical contact elements attached on. Insert the electrical contact elements to the cavities in the housing part. Providing the cable tie and move it through the opening of the fastening device and around the cable harness. Close the cable tie with its closing means and fasten the cable harness to the housing part by pulling (or other closing means) the free end of the cable tie until the cable harness is tightly attached to the housing part. Cutting the free and no longer used end of the cable tie. Attach the cover to the housing part.

### Description of the preferred embodiments

in the following, the invention is described exemplarily with reference to the enclosed figures, in which
- Fig. 1: shows a schematic view of the housing part with an attached cable harness portion;
- Figs. 2: shows in a perspective view the housing part of the electrical cable harness plug;
- Fig. 3: shows the electrical cable harness plug in a perspective view;
- Fig. 4: shows the fastening device of the electrical cable harness plug in a perspective view;
- Fig. 5: shows the fastening device of the electrical cable harness plug in an enlarged perspective view;
- Fig. 6: shows a top view of the housing part;
- Fig. 7: shows a side view of the of the housing part;
- Fig. 8: shows the housing part 10 with a cut along the holding direction Y as a perspective view;
- Fig. 9: shows the cut view from figure 8 in a plane few;
- Fig. 10: shows in a perspective view of the housing part with an attached corrugated tube;
- Fig. 11: shows a cut view of the cut view of electrical cable harness plug shown in Fig 3 with a corrugated tube attached;

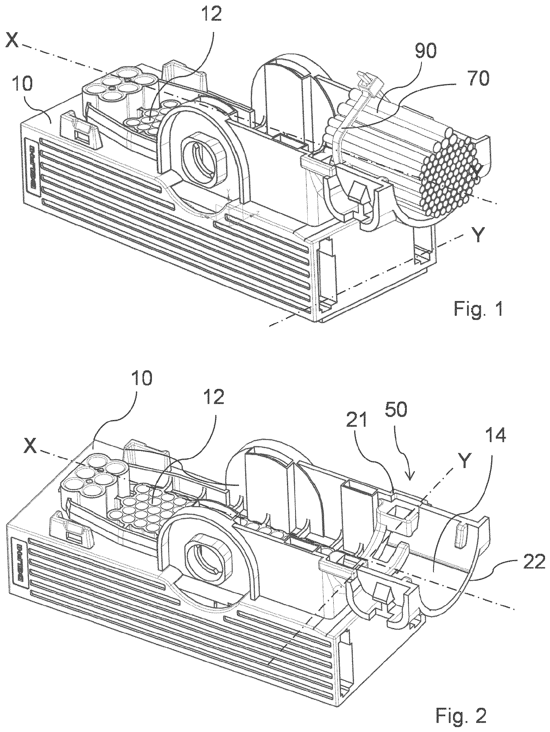

Figure 1 shows a schematic view of the housing part 10 with an attached cable harness 90 portion. The cable harness portion 90 shown in figure 1 is just a portion of a real cable harness. The view is chosen to illustrate how the cable tie 70 is fastened to a fastening device 50 and guided around the cable harness 90 thereby holding the cable harness 90 tightly to the housing part 10.

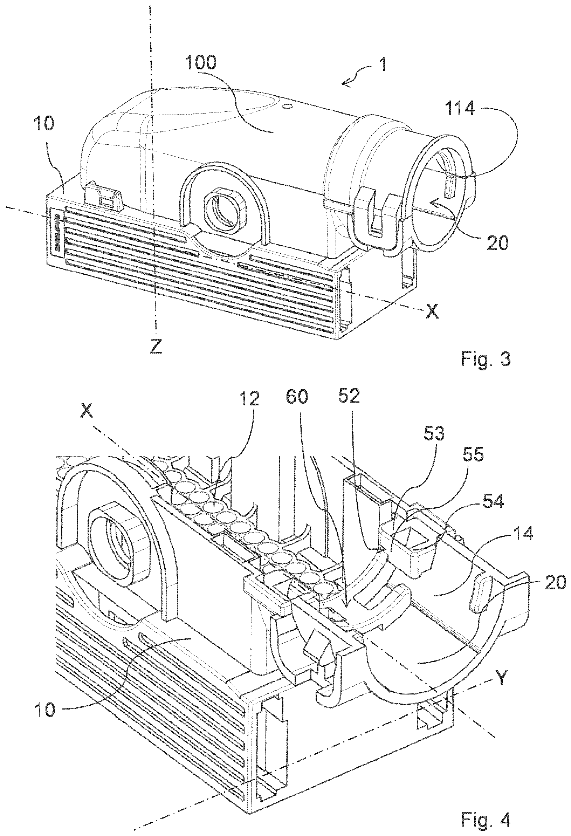

Figure 2 shows in a perspective view the housing part 10 of the electrical cable harness plug 1, comprising the housing part 10 with cavities 12 for receiving electric contact elements and the fastening device 50 to fasten the cable harness 90 that comprises the electrical contact elements. The electrical cable harness plug 1 furthermore comprising a cover 100 (figure 3) to protect the contact elements. A housing transition portion 14 of the housing part and a cover transition portion 114 of the cover 100 cooperate with each other, to define a tube shaped guiding channel 20 for guiding the cable harness 90 through. The fastening device 50 is arranged inside the guiding channel 20. The fastening device 50 comprises means adapted to cooperate with a cable tie 70 such that it guides and holds the cable tie 70 in a holding direction Y perpendicular to an extension direction X of the guiding channel 20.
Figure 3 shows the electrical cable harness plug 1 in a perspective view. The cover 100 is attached to the housing part 10 the transition portion 14 of the housing part and a cover transition portion 114 of the cover 100 cooperate with each other, to define the tube shaped guiding channel 20. The guiding channel 20 is arranged along the extension direction X perpendicular to a mating axis Z.

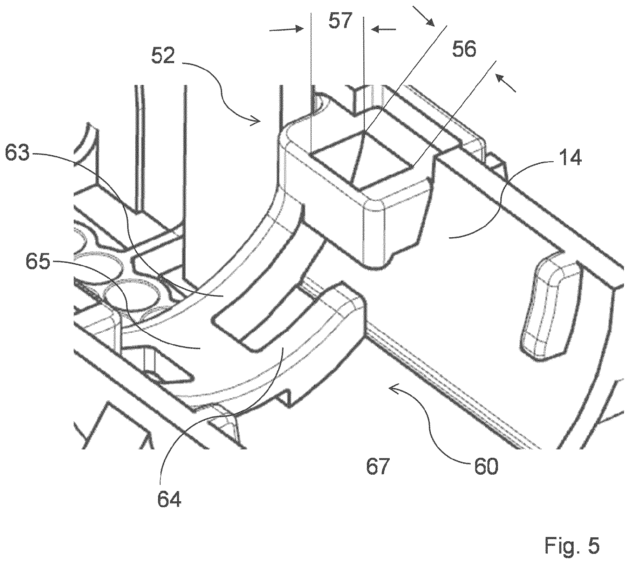

Figure 4 shows the fastening device 50 of the electrical cable harness plug 1 in a perspective view. The fastening device 50 comprises at least one handle 52, comprising a first protrusion 53 and a second protrusion 54 protruding, spaced apart from each other, by a first distance 56 (figure 5) from the housing transition portion 14 into the guiding channel 20. A handle bar 55 connects the free end of the first protrusion 53 and the free end of the second protrusion 54 in a second distance 57 (figure 5) from the housing transition portion 14. The first protrusion 53 and the second protrusion 54 are arranged in a row along the extension direction X of the guiding channel 20.

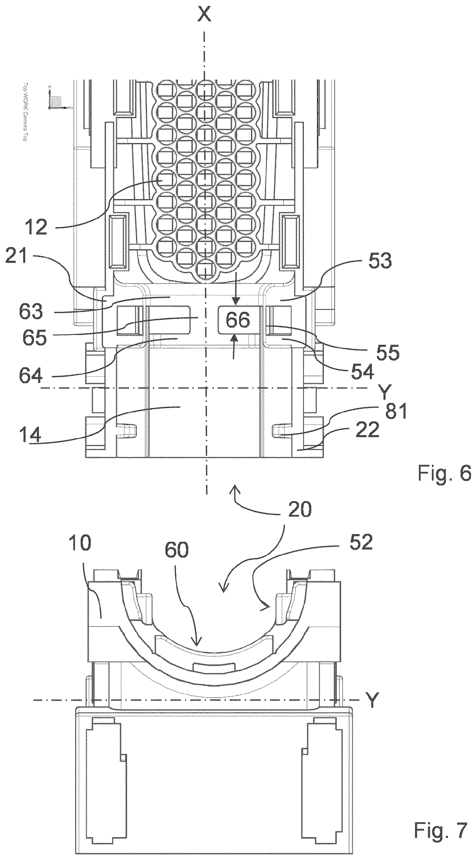

Figure 5 shows a more detailed view of the fastening device 50. The fastening device 50 comprises at least one channel segment 60, comprising a first rib 63 and a second rib 64 protruding along the holding direction Y, spaced apart from each other by a third distance 66 (figure 6) from the housing transition portion 14 into the guiding channel 20. A rib bar 65 connects a portion of the free end of the first rib 63 and a portion of the free end of the second rib 64 in a fourth distance 67 from the housing transition portion 14, thereby defining a tube shaped portion.
Figure 6 shows a top view of the housing part 10 wherein the fastening device 50 comprises at least one handle 52 and at least one channel segment 60 arranged in a row along the holding direction Y. The guiding channel 20 comprises a channel first end 21 and a channel second end 22, wherein the channel first end is closer to the cavities 12 than the channel second end, whereby the fastening device 50 is located at the channel first end.
Figure 7 shows a side view of the housing part 10 with a view direction along the holding direction Y, towards the guiding channel 20.

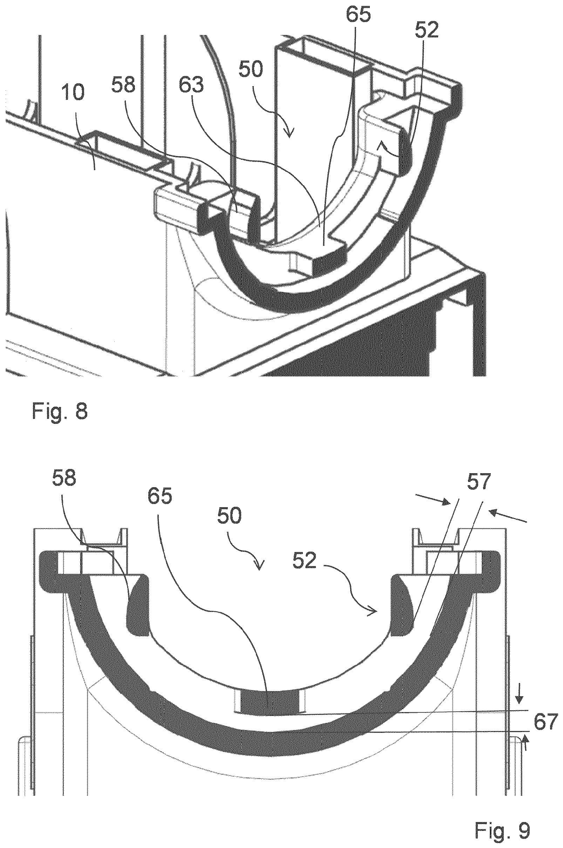

Figure 8 shows the housing part 10 with a cut along the holding direction Y through the fastening device 50, in a perspective view. In this embodiment, the first rib 63 is connected to the handle 52. The handle bar 55 comprises a guiding surface 58 located between the first protrusion 53 and the second protrusion 54, whereby the guiding surface 58 is sloped or curved to enlarge the area of the handle 52 where the cable tie 70 is inserted while assembling
Figure 9 shows the cut view as shown in figure 8 now as front view looking in extension direction X. This view shows best the second distance 57 and the fourth distance 67 of the fastening device 50.

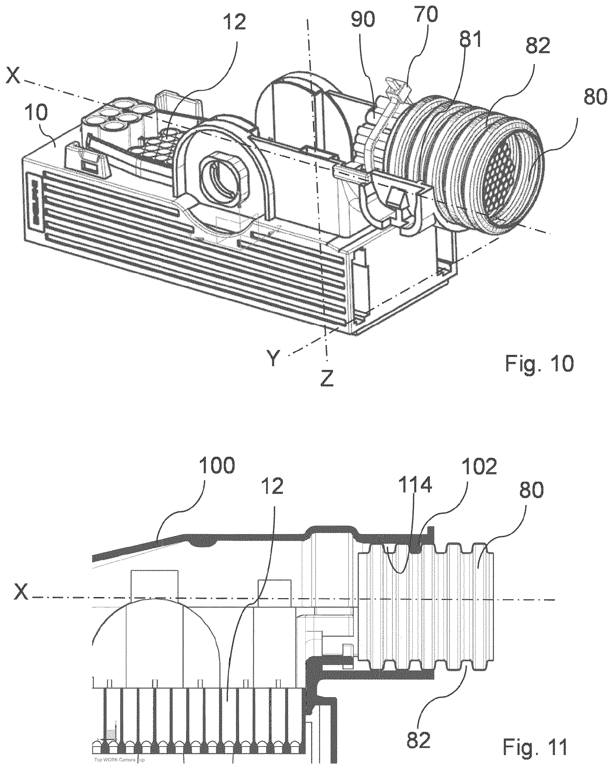

Figure 10 shows in a perspective view of the housing part 10 with a fasted cable harness 90 and an attached corrugated tube 80. The guiding channel 20 comprises holding means to secure the corrugated tube 80 on the channel second end 22 of the guiding channel 20. The holding means comprises at least one holding rib 81 protruding along the holding direction Y from the housing transition portion 14 into the guiding channel 20, whereby the holding rib 81 cooperates with a narrowing 82 in the corrugated tube 80 to secure the corrugated tube.
Figure 11 shows a cut view of the illustration shown in figure 10 (with a corrugated tube attached but without he cable harness) wherein the cut is carried out along the central line of the housing part 10. The cover 100 comprises on the inner side in the cover transition portion 114 a holding rib 102 that cooperates with a narrowing 82 in the corrugated tube 80.

## Claims

1. Electrical cable harness plug (1), comprising a housing part (10) comprising cavities (12) for receiving electric contact elements and a fastening device (50) to fasten a cable harness (90), comprising the electrical contact elements, the electrical cable harness plug furthermore comprising a cover (100) to protect the contact elements, wherein a housing transition portion (14) of the housing part and a cover transition portion (114) of the cover cooperate with each other, to define a tube shaped guiding channel (20) for guiding the cable harness through, wherein the fastening device (50) comprises means adapted to cooperate with a cable tie (70) such that it guides and holds the cable tie (70) in a holding direction (Y) perpendicular to an extension direction (X) of the guiding channel (20), wherein the cable tie (70) is movable through an opening of the fastening device (50) and around the cable harness (90), **characterized in that** the fastening device (50) is arranged inside the guiding channel (20), wherein the fastening device (50) comprises at least one handle (52), comprising a first protrusion (53) and a second protrusion (54) protruding, spaced apart from each other by a first distance (56), from the housing transition portion (14) into the guiding channel (20), a handle bar (55) connects the free end of the first protrusion (53) and the free end of the second protrusion (54) in a second distance (57) from the housing transition portion (14), wherein the first protrusion (53) and the second protrusion (54) are arranged in a row along the extension direction (X) of the guiding channel (20).

2. Electrical cable harness plug according to claim 1, wherein the fastening device (50) comprises at least one channel segment (60), comprising a first rib (63) and a second rib (64) protruding along the holding direction (Y), spaced apart from each other by a third distance (66) from the housing transition portion (14) into the guiding channel (20), wherein at least one rib bar (65) connects a portion of a free end of the first rib (63) and a portion of a free end of the second rib (64) in a fourth distance (67) from the housing transition portion (14), thereby defining a tube shaped portion.

3. Electrical cable harness plug according to claim 1, and comprising a cable tie (70), wherein the first distance (56) is configured to be greater than the width of the cable tie (70) and wherein the second distance (57) is configured to be greater than the height of the cable tie, so that the cable tie can be guided.

4. Electrical cable harness plug according to claim 2, and comprising a cable tie (70), wherein the third distance (66) is configured to be greater than the width of the cable tie (70) and wherein the fourth distance (67) is configured to be greater than the height of the cable tie, so that the cable tie can be guided.

5. Electrical cable harness plug according to claim 2, wherein the at least one handle (52) and the at least one channel segment (60) are arranged in a row along the holding direction (Y).

6. Electrical cable harness plug according to claim 5, wherein the first distance (56) is bigger than the third distance (66) and the second distance (57) is bigger than the fourth distance (67).

7. Electrical cable harness plug according to claim 1, wherein the handle bar (55) comprises a guiding surface (58) located between the first protrusion (53) and the second protrusion (54), whereby the guiding surface is sloped or curved to enlarge the area of the handle (52) where the cable tie (70) is inserted while assembling.

8. Electrical cable harness plug according to any preceding claim, wherein the guiding channel (20) comprises a channel first end (21) and a channel second end (22), wherein the channel first end is closer to the cavities (12) than the channel second end, whereby the fastening device (50) is located at the channel first end.

9. Electrical cable harness plug according to claim 8, wherein the guiding channel (20) comprises holding means to secure a corrugated tube (80) on the channel second end (22) of the guiding channel, wherein the holding means comprises at least one holding rib (81) protruding along the holding direction (Y), from the housing transition portion (14) into the guiding channel (20), whereby the holding rib cooperates with a narrowing (82) in the corrugated tube (80) to secure the corrugated tube.

10. Electrical cable harness plug according to any preceding claim, wherein the housing part (10) is made in one piece.

11. Electrical cable harness plug according to any preceding claim, wherein the housing part (10) is produced by injection molding.

12. Electrical cable harness assembly, comprising;
- an electrical cable harness plug according to any of the preceding claims;
- the cable harness (90);
- the electrical contact elements; and
- the cable tie.

## Patentansprüche

1. Elektrischer Kabelbaumstecker (1) mit einem Gehäuseteil (10), das Hohlräume (12) zur Aufnahme von elektrischen Kontaktelementen und eine Befestigungsvorrichtung (50) zur Befestigung eines Kabelbaums (90) umfasst, der die elektrischen Kontaktelemente umfasst, wobei der elektrische Kabelbaumstecker ferner eine Abdeckung (100) zum Schutz der Kontaktelemente umfasst, wobei ein Gehäuseübergangsabschnitt (14) des Gehäuseteils und ein Abdeckungsübergangsabschnitt (114) der Abdeckung miteinander zusammenwirken, um einen rohrförmigen Führungskanal (20) zum Hindurchführen des Kabelbaums zu definieren, wobei die Befestigungsvorrichtung (50) Mittel umfasst, die geeignet sind, um mit einem Kabelbinder (70) zusammenzuwirken, so dass sie den Kabelbinder (70) in einer Halterichtung (Y) rechtwinklig zu einer Erstreckungsrichtung (X) des Führungskanals (20) führt und hält, wobei der Kabelbinder (70) durch eine Öffnung der Befestigungsvorrichtung (50) hindurch und um den Kabelbaum (90) herum bewegbar ist, **dadurch gekennzeichnet, dass** die Befestigungsvorrichtung (50) innerhalb des Führungskanals (20) angeordnet ist, wobei die Befestigungsvorrichtung (50) mindestens einen Henkel (52) umfasst, der einen ersten Vorsprung (53) und einen zweiten Vorsprung (54) umfasst, die um einen ersten Abstand (56) voneinander beabstandet aus dem Gehäuseübergangsabschnitt (14) in den Führungskanal (20) hinein ragen, wobei eine Henkelstange (55) das freie Ende des ersten Vorsprungs (53) und das freie Ende des zweiten Vorsprungs (54) in einem zweiten Abstand (57) von dem Gehäuseübergangsabschnitt (14) verbindet, wobei der erste Vorsprung (53) und der zweite Vorsprung (54) in einer Reihe entlang der Erstreckungsrichtung (X) des Führungskanals (20) angeordnet sind.

2. Elektrischer Kabelbaumstecker nach Anspruch 1, wobei die Befestigungsvorrichtung (50) mindestens ein Kanalsegment (60) umfasst, das eine erste Rippe (63) und eine zweite Rippe (64) umfasst, die entlang der Halterichtung (Y) in einem dritten Abstand (66) voneinander beabstandet von dem Gehäuseübergangsabschnitt (14) aus in den Führungskanal (20) hineinragen, wobei mindestens ein Rippensteg (65) einen Abschnitt eines freien Endes der ersten Rippe (63) und einen Abschnitt eines freien Endes der zweiten Rippe (64) in einem vierten Abstand (67) von dem Gehäuseübergangsabschnitt (14) verbindet und dadurch einen rohrförmigen Abschnitt definiert.

3. Elektrischer Kabelbaumstecker nach Anspruch 1 und mit einem Kabelbinder (70), wobei der erste Abstand (56) so konfiguriert ist, dass er größer als die Breite des Kabelbinders (70) ist, und wobei der zweite Abstand (57) so konfiguriert ist, dass er größer als die Höhe des Kabelbinders ist, so dass der Kabelbinder geführt werden kann.

4. Elektrischer Kabelbaumstecker nach Anspruch 2 und mit einem Kabelbinder (70), wobei der dritte Abstand (66) so konfiguriert ist, dass er größer als die Breite des Kabelbinders (70) ist, und wobei der vierte Abstand (67) so konfiguriert ist, dass er größer als die Höhe des Kabelbinders ist, so dass der Kabelbinder geführt werden kann.

5. Elektrischer Kabelbaumstecker nach Anspruch 2, wobei der mindestens eine Henkel (52) und das mindestens eine Kanalsegment (60) in einer Reihe entlang der Halterichtung (Y) angeordnet sind.

6. Elektrischer Kabelbaumstecker nach Anspruch 5, wobei der erste Abstand (56) größer ist als der dritte Abstand (66) und der zweite Abstand (57) größer ist als der vierte Abstand (67).

7. Elektrischer Kabelbaumstecker nach Anspruch 1, wobei die Henkelstange (55) eine Führungsfläche (58) umfasst, die zwischen dem ersten Vorsprung (53) und dem zweiten Vorsprung (54) angeordnet ist, wobei die Führungsfläche geneigt oder gekrümmt ist, um den Bereich des Henkels (52) dort zu vergrößern, wo der Kabelbinder (70) während des Zusammenbaus eingeführt wird.

8. Elektrischer Kabelbaumstecker nach einem der vorhergehenden Ansprüche, wobei der Führungskanal (20) ein erstes Kanalende (21) und ein zweites Kanalende (22) aufweist, wobei das erste Kanalende näher bei den Hohlräumen (12) liegt als das zweite Kanalende, wodurch die Befestigungsvorrichtung (50) an dem ersten Kanalende angeordnet ist.

9. Elektrischer Kabelbaumstecker nach Anspruch 8, wobei der Führungskanal (20) ein Haltemittel zum Befestigen eines Wellrohrs (80) an dem zweiten Kanalende (22) des Führungskanals umfasst, wobei das Haltemittel mindestens eine entlang der Halterichtung (Y) aus dem Gehäuseübergangsabschnitt (14) in den Führungskanal (20) hineinragende Halterippe (81) umfasst, wodurch die Halterippe mit einer Verengung (82) in dem Wellrohr (80) zum Befestigen des Wellrohrs zusammenwirkt.

10. Elektrischer Kabelbaumstecker nach einem der vorhergehenden Ansprüche, wobei das Gehäuseteil (10) einteilig ausgebildet ist.

11. Elektrischer Kabelbaumstecker nach einem der vorhergehenden Ansprüche, wobei das Gehäuseteil (10) durch Spritzgießen hergestellt ist.

12. Elektrische Kabelbaumanordnung, umfassend;
- einen elektrischen Kabelbaumstecker nach einem der vorhergehenden Ansprüche;
- den Kabelbaum (90);
- die elektrischen Kontaktelemente; und
- den Kabelbinder.

## Revendications

1. Fiche de faisceau de câbles électriques (1), comprenant une pièce formant boîtier (10) comprenant des cavités (12) pour recevoir des éléments de contact électrique et un dispositif de fixation (50) pour fixer un faisceau de câbles (90), comprenant les éléments de contact électrique, la fiche de faisceau de câbles électriques comprenant en outre un couvercle (100) pour protéger les éléments de contact, dans laquelle une partie de transition de boîtier (14) de la pièce formant boîtier et une partie de transition de couvercle (114) du couvercle coopèrent l'une avec l'autre pour définir un canal de guidage en forme de tube (20) pour guider le faisceau de câbles à travers celui-ci, dans laquelle le dispositif de fixation (50) comprend un moyen adapté à coopérer avec un serre-câble (70) de telle sorte qu'il guide et maintient le serre-câble (70) dans une direction de maintien (Y) perpendiculaire à une direction d'extension (X) du canal de guidage (20), dans laquelle le serre-câble (70) est mobile à travers une ouverture du dispositif de fixation (50) et autour du faisceau de câbles (90), **caractérisée en ce que** le dispositif de fixation (50) est disposé à l'intérieur du canal de guidage (20), dans laquelle le dispositif de fixation (50) comprend au moins une poignée (52), comprenant une première saillie (53) et une deuxième saillie (54) faisant saillie, en étant espacées l'une de l'autre d'une première distance (56), de la partie de transition de boîtier (14) dans le canal de guidage (20), une barre de poignée (55) relie l'extrémité libre de la première saillie (53) et l'extrémité libre de la deuxième saillie (54) à une deuxième distance (57) de la partie de transition de boîtier (14), dans laquelle la première saillie (53) et la deuxième saillie (54) sont disposées en ligne le long de la direction d'extension (X) du canal de guidage (20).

2. Fiche de faisceau de câbles électriques selon la revendication 1, dans laquelle le dispositif de fixation (50) comprend au moins un segment de canal (60), comprenant une première nervure (63) et une deuxième nervure (64) faisant saillie le long de la direction de maintien (Y), en étant espacées l'une de l'autre d'une troisième distance (66), de la partie de transition de boîtier (14) dans le canal de guidage (20), dans laquelle au moins une barre de nervures (65) relie une partie d'une extrémité libre de la première nervure (63) et une partie d'une extrémité libre de la deuxième nervure (64) à une quatrième distance (67) de la partie de transition de boîtier (14), définissant ainsi une partie en forme de tube.

3. Fiche de faisceau de câbles électriques selon la revendication 1, et comprenant un serre-câble (70), dans laquelle la première distance (56) est configurée pour être supérieure à la largeur du serre-câble (70) et dans laquelle la deuxième distance (57) est configurée pour être supérieure à la hauteur du serre-câble, de telle sorte que le serre-câble peut être guidé.

4. Fiche de faisceau de câbles électriques selon la revendication 2, et comprenant un serre-câble (70), dans laquelle la troisième distance (66) est configurée pour être supérieure à la largeur du serre-câble (70) et dans laquelle la quatrième distance (67) est configurée pour être supérieure à la hauteur du serre-câble, de telle sorte que le serre-câble peut être guidé.

5. Fiche de faisceau de câbles électriques selon la revendication 2, dans laquelle ladite au moins une poignée (52) et ledit au moins un segment de canal (60) sont disposés en ligne le long de la direction de maintien (Y).

6. Fiche de faisceau de câbles électriques selon la revendication 5, dans laquelle la première distance (56) est supérieure à la troisième distance (66) et la deuxième distance (57) est supérieure à la quatrième distance (67).

7. Fiche de faisceau de câbles électriques selon la revendication 1, dans laquelle la barre de poignée (55) comprend une surface de guidage (58) située entre la première saillie (53) et la deuxième saillie (54), la surface de guidage étant inclinée ou incurvée pour agrandir la zone de la poignée (52) où le serre-câble (70) est inséré lors de l'assemblage.

8. Fiche de faisceau de câbles électriques selon l'une quelconque des revendications précédentes, dans laquelle le canal de guidage (20) comprend une première extrémité de canal (21) et une deuxième extrémité de canal (22), dans laquelle la première extrémité de canal est plus proche des cavités (12) que la deuxième extrémité de canal, le dispositif de fixation (50) étant situé à la première extrémité de canal.

9. Fiche de faisceau de câbles électriques selon la revendication 8, dans laquelle le canal de guidage (20) comprend un moyen de maintien pour fixer un tube ondulé (80) sur la deuxième extrémité de canal (22) du canal de guidage, dans laquelle le moyen de maintien comprend au moins une nervure de maintien (81) faisant saillie le long de la direction de maintien (Y) de la partie de transition de boîtier (14) dans le canal de guidage (20), la nervure de maintien coopérant avec un rétrécissement (82) dans le tube ondulé (80) pour fixer le tube ondulé.

10. Fiche de faisceau de câbles électriques selon l'une quelconque des revendications précédentes, dans laquelle la pièce formant boîtier (10) est réalisée d'une seule pièce.

11. Fiche de faisceau de câbles électriques selon l'une quelconque des revendications précédentes, dans laquelle la pièce formant boîtier (10) est produite par moulage par injection.

12. Ensemble faisceau de câbles électriques, comprenant :
- une fiche de faisceau de câbles électriques selon l'une quelconque des revendications précédentes ;
- le faisceau de câbles (90) ;
- les éléments de contact électrique ; et
- le serre-câble.
